(19) Europäisches Patentamt

European Patent Office

Office européen des brevets

(11) EP 0 685 438 B1

## (12) EUROPÄISCHE PATENTSCHRIFT

(45) Veröffentlichungstag und Bekanntmachung des Hinweises auf die Patenterteilung:
**18.12.1996 Patentblatt 1996/51**

(51) Int. Cl.$^6$: **C04B 41/49**, C04B 24/42, C04B 28/14

(21) Anmeldenummer: 95108408.6

(22) Anmeldetag: 01.06.1995

(54) **Verfahren zur wasserabweisenden Imprägnierung von Gips**

Process for water-repellent impregnation of gypsum

Procédé pour l'imprégnation hydrofuge de plâtre

(84) Benannte Vertragsstaaten:
**AT BE CH DE ES FR GB IT LI NL SE**

(30) Priorität: **01.06.1994 DE 4419257**

(43) Veröffentlichungstag der Anmeldung:
**06.12.1995 Patentblatt 1995/49**

(73) Patentinhaber: **Wacker-Chemie GmbH**
**D-81737 München (DE)**

(72) Erfinder:
- **Gerhardinger, Dieter**
  **D-84489 Burghausen (DE)**
- **Mayer, Hans, Dr.**
  **D-84489 Burghausen (DE)**
- **Mittermeier, Johannes**
  **D-84503 Altoetting (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
| EP-A- 0 592 206 | DE-A- 4 124 892 |
| DE-A- 4 433 864 | FR-A- 2 662 171 |
| GB-A- 1 177 662 | US-A- 2 813 085 |

- **CHEMICAL ABSTRACTS, vol. 103, no. 8,**
  **26.August 1985 Columbus, Ohio, US; abstract**
  **no. 58251u,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur wasserabweisenden Imprägnierung von Gipsformkörpern durch Behandlung mit Si-gebundene Wasserstoffatome enthaltendem Organosiloxan und Alkalisilikat.

Es ist aus US-A-3,455,710 bekannt, daß Gips durch Imprägnieren mit Si-gebundene Wasserstoffatome enthaltenden Organosiloxanen (H-Siloxane) wasserabweisende Eigenschaften verliehen werden können. Dort ist auch die Imprägnierung von Mischungen aus Gips und Calciumhydroxid mit H-Siloxanen beschrieben. Calciumhydroxid verbessert die wasserabweisende Wirkung der H-Siloxane. Calciumhydroxid ist jedoch schlecht wasserlöslich und kann deshalb nur in unerwünscht großen Wassermengen oder als schlecht dosierbare Aufschlämmung eingesetzt werden.

Die wasserabweisende Wirkung von H-Siloxanen kann auch durch Zusatz von Siliconaten verbessert werden. Jedoch werden große Mengen der relativ teuren Siliconate benötigt.

Bei der Serienproduktion von Gipsformkörpern, wie Gipswandbauplatten und Gipskartonplatten wird üblicherweise durch Vermischen von Gips mit Wasser, Hydrophobierungsmittel und anderen Zusatzstoffen ein Gipsbrei hergestellt, der anschließend getrocknet wird. Hohe Trocknungstemperaturen verkürzen die Durchlaufzeiten in kontinuerlichen Fertigungsstraßen. Jedoch zeigen bei 90°C getrocknete Gipsformkörper im Vergleich zu weniger heiß getrockneten Gipsformkörpern eine sprunghaft ansteigende Wasseraufnahme auf. Die Hydrophobierung mit H-Siloxanen ist bei derartigen Gipsformkörpern kaum noch wirksam. Auch H-Siloxane und Calciumhydroxid enthaltende Gipsformkörper zeigen eine erhöhte Wasseraufnahme, wenn sie bei 90°C getrocknet worden sind.

In FR-A-2662171 ist eine Zusammensetzung zum Beschichten von porösen und nichtporösen Materialien beschrieben, um diese wasserabweisend zu machen. Die Zusammensetzung besteht im wesentlichen aus einem Alkylpolysiloxan, welches Wasserstoffatome aufweisen kann und Natriumsilikat.

Der vorliegenden Erfindung liegt die Aufgabe zugrunde, ein Verfahren zur wasserabweisenden Imprägnierung von Gips bereitzustellen, das vorstehende Nachteile nicht aufweist.

Die Erfindung betrifft ein Verfahren zur wasserabweisenden Imprägnierung von Formkörpern mit A) Si-gebundene Wasserstoffatome enthaltendem Organosiloxan (H-Siloxan) und B) Alkalisilikat dadurch gekennzeichnet, daß die Formkörper Gipsformkörper sind und H-Siloxan und Alkalisilikat in den Gipsbrei vor dem Formen der Formkörper eingearbeitet werden.

Die wasserabweisende Wirkung der H-Siloxane wird durch Zusatz von Alkalisilikat erheblich verbessert. Insbesondere ist die wasserabweisende Wirkung bei mit hohen Trocknungstemperaturen behandelten Gipsformkörpern gut.

Die erfindungsgemäße Imprägnierung kann mit einem H-Siloxan oder einem Gemisch mehrerer H-Siloxane erfolgen. Die H-Siloxane können beispielsweise Öle oder Harze sein. Besonders geeignet sind die H-Siloxane aus Einheiten der allgemeinen Formel 1,

$$H_a SiR^1_b O_{\frac{4-a-b}{2}} , \qquad (1)$$

in der $R^1$ gleiche oder verschiedene einwertige, gegebenenfalls halogensubstituierte $C_1$-$C_{15}$-Kohlenwasserstoff- oder Kohlenwasserstoffoxyreste oder Hydroxylgruppen, a 0, 1, 2 oder 3, durchschnittlich 0,01 bis 1,2, insbesondere 0,1 bis 1 und b 0, 1, 2 oder 3, durchschnittlich 1,0 bis 2,0, insbesondere 1,4 bis 1,8 bedeutet, mit der Maßgabe, daß pro Molekul mindestens ein Si-gebundenes Wasserstoffatom vorhanden ist.

Beispiele für die $C_1$-$C_{15}$-Kohlenwasserstoffreste sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; Aralkylreste, wie der Benzylrest, der alpha- und der β-Phenylethylrest.

Beispiele für halogensubstituierte $C_1$-$C_{15}$-Kohlenwasserstoffreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Besonders bevorzugt sind die nicht substituierten $C_1$-$C_6$-Alkylreste, insbesondere der Methylrest und der Phenylrest.

Beispiele für die $C_1$-$C_{15}$-Kohlenwasserstoffoxyreste sind die vorstehenden $C_1$-$C_{15}$-Kohlenwasserstoffreste, die über ein zweiwertiges Sauerstoffatom an das Siliciumatom gebunden sind. Vorzugsweise sind höchstens 5 %, insbesondere keine der Reste $R^1$, Kohlenwasserstoffoxyreste oder Hydroxylgruppen.

Vorzugsweise weisen die H-Siloxane eine Viskosität von höchstens 300 mm²/s, insbesondere von 5 bis 100 mm²/s, bei 25°C auf. Lineare H-Siloxane sind bevorzugt. Der Wasserstoffgehalt beträgt vorzugsweise 0,05 bis 5,0 Gew.-%.

Die H-Siloxane können mit oder ohne organisches Lösungsmittel eingesetzt werden. Vorzugsweise werden die H-Siloxane zusammen mit Tensiden als wäßrige Emulsion oder wäßriger Schaum verwendet.

Vorzugsweise werden, bezogen auf 100 Gewichtsteile Gips, 0,1 bis 5, insbesondere 0,2 bis 2 Gewichtsteile H-Siloxan eingesetzt.

Als Alkalisilikat werden vorzugsweise die als Wasserglas bezeichneten Natrium- und Kaliumsalze der Kieselsäuren eingesetzt.

Die Alkalisilikate weisen vorzugsweise ein molares Verhältnis $SiO_2 : M_2O$ von 8,0 bis 0,5, insbesondere von 5,0 bis 1,5 auf, wobei M ein Alkalimetallion bedeutet.

Vorzugsweise werden, bezogen auf 100 Gewichtsteile Gips, 0,05 bis 5, insbesondere 0,1 bis 2 Gewichtsteile Alkalisilikat eingesetzt.

Unter den Gipsarten ist Plaster ($CaSO_4 \cdot H_2O$) in Form von beispielsweise Baugips, Stuckgips oder Isoliergips bevorzugt. Das erfindungsgemäße Verfahren eignet sich jedoch auch zur Imprägnierung von anderen Gipsarten, wie Estrichgips, Marmorgips und Anhydrit. Gut geeignet ist auch das bei der Rauchgasentschwefelung anfallende Calciumsulfat.

Der Gips kann Zusätze enthalten, die die Herstellung von Gipsformkörpern erleichtern oder die Eigenschaften der Gipsformkörper verbessern. Zusätze sind beispielsweise Erdalkalioxide oder Erdalkalihydroxide, Füllstoffe, wie Siliciumdioxid und Cellulosefasern, Beschleuniger, wie Kaliumsulfat und Aluminiumsulfat, Verzögerer, wie Eiweiße oder Weinsäuresalze, Plastifizierungsmittel für den Gipsbrei, wie Ligninsulfonate und Haftvermittler für Karton, wie Stärke.

Die Imprägnierung des Gipses erfolgt in Masse, d.h. H-Siloxan und Alkalisilikat werden in den Gipsbrei vor dem Formen von Formkörpern, gegebenenfalls mit anderen Zusatzstoffen eingearbeitet. Die Alkalisilikate sind gut wasserlöslich und können deshalb bei der Imprägnierung in Masse dem trockenen Gips oder dem Gipsbrei als Pulver oder vorzugsweise als wäßrige Lösung zugegeben werden. Bei der Imprägnierung in Masse wird als Gips vorzugsweise $CaSO_4 \cdot 1/2 \, H_2O$ eingesetzt.

Beim Abbindeprozeß des mit H-Siloxanemulsion und Kaliumsilikatlösung versetzten Gipses wird Wasser wieder ausgeschwitzt. Bei Formkörpern mit hinreichend großer Masse tritt dieses Wasser perlenförmig an der Oberfläche aus. Weder die mechanischen Eigenschaften der Formkörper, noch die Abbindezeit werden wesentlich beeinflußt. Die austretende Wassermenge beträgt etwa 5 bis 20 Gewichtsprozent des eingesetzten Wassers. Dieses Wasser kann mechanisch entfernt und vorzugsweise dem Anmachwasser weiterer Ansätze zugeführt werden, da es noch H-Siloxan, andere Organosiloxane, Alkalisilikat und gegebenenfalls andere Zusatzstoffe enthalten kann.

Das ausgeschwitzte Wasser ist Teil des überflüssigen Wassers in den Formkörpern, welches üblicherweise durch Trocknen entfernt wird. Das mechanisch entfernbare Wasser muß nicht durch Wärmebehandlung getrocknet werden. Dies führt zu einer deutlichen Energieeinsparung.

Beim erfindungsgemäßen Verfahren beträgt das Gewichtsverhältnis von H-Siloxan zu Alkalisilikat vorzugsweise 20:1 bis 1:5, insbesondere 6:1 bis 1:1.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 25°C.

Beispiele

**Beispiel 1**

**a) Herstellung der Probekörper**

Aus 100 Gewichtsteilen Naturgips ($CaSO_4 \cdot 1/2 \, H_2O$), 80 Gewichtsteilen Wasser und gegebenenfalls weiteren Gewichtsteilen Zusatz wurde ein Gipsbrei hergestellt und in kreisförmige Formen zu Probekörpern mit einem Durchmesser von 85 mm und 6 mm Höhe gegossen. Nach 30 Minuten wurden die erstarrten Probekörper entschalt und 5 Stunden bei den in Tabelle I angegebenen Temperaturen in einem Umlufttrockenschrank getrocknet.

Als Zusatz wurden eingesetzt:

H-Siloxanemulsion: Emulsion von 50 Gewichtsteilen eines Trimethylsilyl-endblockierten Polymethylhydrogensiloxangemischs der Formel $(CH_3)_3SiO[SiH(CH_3)O]_xSi(CH_3)_3$ mit x = 45 bis 90 und 2,5 Gewichtsteilen eines Polyvinylalkohols als Emulgator in 47,5 Gewichtsteilen Wasser.

Kaliumsilikatlösung:

Lösung von 28 Gewichtsteilen eines Kaliumsilikats mit einem molaren Verhältnis $SiO_2 : K_2O$ von 3,8 in 72 Gewichtsteilen Wasser.

Calciumhydroxid als Pulver

**b) Wasseraufnahme analog DIN 18180**

Die Probekörper wurden in horizontaler Lage in Wasser von 23°C so eingetaucht, daß 50 mm Wassersäule über der Probenoberfläche stand. Nach zweistündiger Wasserlagerung wurden die Probekörper aus dem Wasser genommen, das oberflächlich anhaftende Wasser wurde entfernt und die Massenzunahme durch Verwiegen bestimmt. Die Wasseraufnahme als Massenanteil in % ist in Tabelle I angegeben.

Tabelle I

| Trocknungstemperatur [°C] | Wasseraufnahme [%] | | | |
|---|---|---|---|---|
| | ohne Additiv | 1-Gew.teil H-Siloxanemulsion | 1 Gew.teil Calciumhydroxid + 1 Gew.teil H-Siloxanemulsion | 1 Gew.teil Kaliumsilikatlösung + 1 Gew.teil H-Siloxanemulsion |
| 40 | 44,9 | 14,2 | 2,0 | 1,8 |
| 50 | 46,2 | 25,5 | 1,9 | 1,6 |
| 60 | 45,1 | 24,2 | 3,5 | 2,0 |
| 70 | 44,1 | 24,9 | 1,9 | 2,1 |
| 80 | 45,8 | 29,2 | 2,0 | 1,7 |
| 90 | 70,7 | 70,3 | 10,7 | 2,3 |

Die Wasseraufnahme der mit H-Siloxanemulsion und Kaliumsilikatlösung hergestellten Probekörper ist auch nach einer Trocknung bei 90°C sehr gering.

**Beispiel 2**

**a) Herstellung der Probekörper**

Aus 100 Gewichtsteilen Naturgips (CaSO$_4$ · 1/2 H$_2$O), 80 Gewichtsteilen Wasser und gegebenenfalls weiteren Gewichtsteilen Zusatz wurde ein Gipsbrei hergestellt und in Formen zu quaderförmigen Probekörpern mit den Maßen 40 mm x 40 mm x 160 mm gegossen. Nach 30 Minuten wurden die erstarrten Probekörper entschalt. Zusätze und Abbindeverhalten der Probekörper sind in Tabelle II angegeben. Die Zusätze sind in Beispiel 1 beschrieben.

Beim Abbindeprozeß des mit H-Siloxanemulsion und Kaliumsilikatlösung versetzten Gipses wurde Wasser wieder ausgeschwitzt. Dieses Wasser trat perlenförmig an der Oberfläche aus.

Die Probekörper wurden 100 Stunden bei 40°C in einem Umlufttrockenschrank getrocknet.

**b) Wasseraufnahme analog DIN 18180**

Die Probekörper wurden wie in Beispiel 1 in Wasser gelagert und von oberflächlich anhaftendem Wasser befreit. Die Wasseraufnahme als Massenanteil in % ist in Tabelle II angegeben.

Tabelle II

| | Wasseraufnahme [%] | Abbindeverhalten |
|---|---|---|
| ohne Zusatz | 44,8 | kein Schwitzwasser |
| 1 Gew.teil H-Siloxanemulsion | 2,0 | kein Schwitzwasser |
| 1 Gew.teil Kaliumsilikatlösung + 1 Gew.teil H-Siloxanemulsion | 0,8 | 8,2 Gewichtsteile Wasser werden ausgeschwitzt; das entspricht 10 Gew.% des eingesetzten Wassers. |

**Patentansprüche**

1. Verfahren zur wasserabweisenden Imprägnierung von Formkörpern mit

    A) Si-gebundene Wasserstoffatome enthaltendem Organosiloxan (H-Siloxan) und
    B) Alkalisilikat

dadurch gekennzeichnet, daß die Formkörper Gipsformkörper sind und H-Siloxan und Alkalisilikat in den Gipsbrei vor dem Formen der Formkörper eingearbeitet werden.

2. Verfahren nach Anspruch 1, wobei die H-Siloxane aus Einheiten der allgemeinen Formel 1,

$$H_a SiR^1_b O_{\frac{4-a-b}{2}} \, , \qquad (1)$$

aufgebaut sind, in der

$R^1$ gleiche oder verschiedene einwertige, gegebenenfalls halogensubstituierte $C_1$-$C_{15}$-Kohlenwasserstoff- oder Kohlenwasserstoffoxyreste oder Hydroxylgruppen,

a  0, 1, 2 oder 3, durchschnittlich 0,01 bis 1,2, insbesondere 0,1 bis 1 und

b  0, 1, 2 oder 3, durchschnittlich 1,0 bis 2,0, insbesondere 1,4 bis 1,8 bedeutet, mit der Maßgabe, daß pro Molekül mindestens ein Si-gebundenes Wasserstoffatom vorhanden ist.

3. Verfahren nach Anspruch 1 oder 2, wobei als Alkalisilikat Natrium- und Kaliumsalze der Kieselsäuren eingesetzt werden.

4. Verfahren nach Anspruch 1 bis 3, wobei, bezogen auf 100 Gewichtsteile Gips, 0,1 bis 5 Gewichtsteile H-Siloxan eingesetzt werden.

5. Verfahren nach Anspruch 1 bis 4, wobei, bezogen auf 100 Gewichtsteile Gips, 0,05 bis 5 Gewichtsteile Alkalisilikat eingesetzt werden.

**Claims**

1. Process for the water-repellent impregnation of shaped articles with A) organosiloxane containing Si-bonded hydrogen atoms (H-siloxane) and B) alkali metal silicate characterized in that the shaped articles are shaped plaster articles and H-siloxane and alkali metal silicate are incorporated into the plaster slurry prior to shaping the shaped articles.

2. Process according to Claim 1, wherein the H-siloxanes are built up of units of the general formula 1

$$H_a SiR^1_b O_{\frac{4-a-b}{2}} \, , \qquad (1)$$

where

$R^1$ are identical or different monovalent, unsubstituted or halogen-substituted $C_1$-$C_{15}$-hydrocarbon or hydrocarbon-oxy radicals or hydroxyl groups,

a  is 0, 1, 2 or 3, on average from 0.01 to 1.2, in particular from 0.1 to 1, and

b  is 0, 1, 2 or 3, on average from 1.0 to 2.0, in particular from 1.4 to 1.8, with the proviso that at least one Si-bonded hydrogen atom is present per molecule.

3. Process according to Claim 1 or 2, wherein sodium and potassium salts of silicic acids are used as alkali metal silicate.

4. Process according to any of Claims 1 to 3, wherein from 0.1 to 5 parts by weight of H-siloxane are used per 100 parts by weight of plaster.

5. Process according to any of Claims 1 to 4, wherein from 0.05 to 5 parts by weight of alkali metal silicate are used per 100 parts by weight of plaster.

**Revendications**

1.  Procédé pour l'imprégnation hydrofuge de pièces moulées avec

    (A) un organosiloxane contenant des atomes d'hydrogène liés à Si (H-siloxane) et
    (B) un silicate alcalin,

    caractérisé en ce que les pièces moulées sont des pièces moulées de plâtre et que le H-siloxane et le silicate alcalin sont introduits dans la masse de plâtre avant le moulage de la pièce moulée.

2.  Procédé suivant la revendication 1, dans lequel le H-siloxane est construit à partir de motifs de formule générale 1,

$$H_a SiR_b^1 O_{(4-a-b)/2},\qquad\qquad(1)$$

    dans laquelle

    $R^1$ représente des radicaux hydrocarbure ou oxy-hydrocarbure en $C_1$-$C_{15}$ monovalents, identiques ou différents, facultativement halogénosubstitués ou des groupes hydroxyle,
    a représente 0, 1, 2 ou 3, en moyenne 0,01 à 1,2, en particulier 0,1 à 1, et
    b représente 0, 1, 2 ou 3, en moyenne 1,0 à 2,0, en particulier 1,4 à 1,8;

    avec la condition que par molécule, soit présent au moins un atome d'hydrogène lié à Si.

3.  Procédé suivant la revendication 1 ou 2, dans lequel l'on utilise comme silicate alcalin, des sels de sodium et de potassium des acides siliciques.

4.  Procédé suivant les revendications 1 à 3, dans lequel l'on utilise 0,1 à 5 parties en poids de H-siloxane sur base de 100 parties en poids de plâtre.

5.  Procédé suivant les revendications 1 à 4, dans lequel l'on utilise 0,05 à 5 parties en poids de silicate alcalin sur base de 100 parties en poids de plâtre.